(19) Europäisches Patentamt
European Patent Office
Office européen des brevets

(11) **EP 4 174 814 A1**

(12) **EUROPEAN PATENT APPLICATION**

(43) Date of publication:
**03.05.2023 Bulletin 2023/18**

(21) Application number: **21204785.6**

(22) Date of filing: **26.10.2021**

(51) International Patent Classification (IPC):
**G08B 29/04** (2006.01)    **G08B 13/193** (2006.01)

(52) Cooperative Patent Classification (CPC):
**G08B 13/193; G08B 29/046**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Carrier Fire & Security EMEA BV**
**1831 Diegem (BE)**

(72) Inventors:
• **MANSFELD, Sebastian**
  **80-890 Gdansk (PL)**
• **MILEK, Tadeusz**
  **80-890 Gdansk (PL)**
• **SULKOWSKI, Lukasz**
  **80-890 Gdansk (PL)**
• **MORUSIEWICZ, Marcin**
  **80-890 Gdansk (PL)**

(74) Representative: **Dehns**
**St. Bride's House**
**10 Salisbury Square**
**London EC4Y 8JD (GB)**

(54) **MOTION DETECTOR WITH MASKING DETECTION**

(57)    A motion detector (1) for a security system comprises a primary sensing system including a PIR sensor (5) configured to detect movement of a person within a monitored environment (2), and an ancillary sensing system including a first emitter (7), a second emitter (8) and a receiver (9) configured to detect masking of the primary sensing system.

Masking by an object (10) in the monitored environment (2) is determined using the first emitter (7) and the receiver (9) based on a time-of-flight of an optical signal emitted into the monitored environment (2) and reflected by the object (10). Masking by obscuring of a window (4) of the motion detector (1) is determined using the second emitter (8) and the receiver (9) based on the intensity of light transmission from the second emitter (8) through the window (4) to the receiver (9).

FIG. 2

**Description**

The present disclosure relates to a motion detector capable of detecting when it has been masked.

Motion detectors are commonly employed in security systems, such as intrusion detection system. Such systems detect motion within a monitored space, and may employ a variety of different detection techniques to do so, such as passive infrared (PIR) detection and RADAR detection.

One way in which motion detectors can be defeated is by masking the sensor window of the motion detector with a barrier, thereby preventing motion behind the barrier from being detected. For example, a piece of opaque material may be placed in front of a PIR motion detector, or a window of the motion detector may be covered using spray paint or the like.

It is desirable for motion detectors to be able to determine when they have been masked. This is sometimes achieved by providing an infrared emitter on the outside of the motion detector, which will periodically illuminate the monitored space with infrared light. Then, either the main PIR sensor of the motion detector, or a separate infrared detector, will look at the intensity of the reflected light.

If no reflected infrared light is detected, then this implies that the window of the detector has been covered, for example using spray paint. If a high amount of reflected infrared light is detected, then this implies that an object has been placed relatively close to the motion detector and is blocking a large amount of the field of view of the motion detector. However, selecting an appropriate sensitivity threshold for this type of masking detection is difficult.

The masking detection must be relatively sensitive in order to detect masking using materials that absorb a large amount of infrared light, such as black paper. However, using high sensitivity can result in false detections of masking, for example where a reflective object such as a high-visibility vest having reflective bands is left in the field of view of the motion detector.

An exemplary motion detector having masking detection that seeks to address some of these problems is disclosed in US 4,752,768. However, this system may still generate false masking detections.

A need exists for an improved motion detector capable of detecting masking.

Viewed from a first aspect, the present invention provides a motion detector for a security system, the motion detector comprising: a primary sensing system configured to detect movement of a person within a monitored environment; and an ancillary sensing system configured to detect masking of the primary sensing system, the ancillary sensing system comprising an optical time-of-flight sensor.

The use of a time-of-flight sensor may be less prone to false masking detections than sensing systems based on the intensity of reflected light, as time-of-flight sensors are not confused by highly reflective materials. Furthermore, time-of-flight sensors may be able to better identify masking that can be difficult to detect using intensity-based detection, such as masking using black objects, particularly in cases where the black object is spaced some distance away from the motion detector.

The primary sensing system may comprise a sensor, which may be any one of an infrared sensor, a microwave sensor and an ultrasound sensor. The infrared sensor may comprise a passive infrared sensor or an active infrared sensor. The microwave sensor may comprise a RADAR sensor.

Preferably, the primary sensing system comprises a passive infrared sensor.

The primary sensing system may comprise a focussing element, such as a mirror. The mirror may be a Fresnel mirror. The focussing element may be configured to redirect and/or focus light received from the monitored environment onto the sensor of the primary sensing system.

The time-of-flight sensor may be based on a time-of-flight of light, such as one of visible light, infrared light or ultraviolet light. That is to say, electromagnetic radiation having a wavelength of between 10nm and 1mm. Preferably, the time-of-flight sensor uses non-visible light, i.e. ultraviolet light (having a wavelength of between 10nm and 400nm) or infrared light (having a wavelength of between 700nm and 1mm).

The time-of-flight sensor may be configured to determine a distance to an objected within a field of view of the time-of-flight sensor, and preferably to an object within field of view of the time-of-flight sensor closest to the motion detector. The field of view of the time-of-flight sensor preferably overlaps with the monitored environment of motion detector, and preferably is substantially within the monitored environment of motion detector.

Preferably, the time-of-flight sensor comprises an infrared time of flight sensor.

The time-of-flight sensor may comprise an emitter and a detector. The emitter of the optical time-of-flight sensor may be configured to emit light into the monitored environment. The detector of the optical time-of-flight sensor may be configured to receive light from the monitored environment, for example after reflection of the light by an object within the monitored environment.

The emitter may comprise a light emitter, such as a light-emitting diode or a laser diode. The emitter is preferably an infrared emitter. The emitter may be configured to emit a light signal comprising at least one pulse of light. The or each pulse of light may have a duration of less than 1 $\mu$s, optionally less than 100 ns, and further optionally less than 10 ns.

The time-of-flight sensor may comprise a plurality of emitters, such as at least two or at least three emitters. The emitters may each have a field of view which cover different areas of the monitored environment. Preferably, the fields of view of the plurality of overlap one another by less than 50%. The light emitted by each of the plurality of emitters may be detected by the same detector.

The detector may comprise a photodetector, and particularly an infrared detector. The detector may comprise a filter, such as a bandpass filter. The filter may permit the detector to receive wavelengths of light corresponding to a wavelength of light emitted by the emitter.

The motion detector may comprise a housing. The housing may include a a window or lens. The window or lens may be forward facing with respect to the motion detector and/or downward facing with respect to the motion detector. The window or lens may be substantially transparent with respect to a wavelength of light corresponding to the primary sensing system, such as infrared light. The window or lens may be opaque or translucent with respect to visible light.

The primary sensing system may disposed inside the housing and may be configured to monitor the monitored environment through the window or lens.

The emitter of the time-of-flight sensor may be configured to emit the light into the monitored environment without the light passing through the window or lens.

The emitter of the time-of-flight sensor may comprise an emitter lens or an emitter window, which may be different from the window or lens of the primary sensing system. The emitter lens or window may be exposed from the housing and may be configured to direct light from the emitter of the time-of-flight sensor into the monitored environment.

The detector of the optical time-of-flight sensor may be configured to receive the light reflected from the monitored environment without the reflected light passing through the window or lens or after the reflected light has passed through the window or lens.

The optical time-of-flight sensor may be a first ancillary sensor, and the ancillary sensor system may further comprise a second ancillary sensor. The second ancillary sensor may be configured to detect a change in transparency of the window or lens of the primary sensing system.

The second ancillary sensor may comprise an emitter and a detector. In some embodiments, the detector of the first ancillary sensor and the detector of the second ancillary sensor may be the same detector.

The emitter of the second ancillary sensor may be configured to emit light through the window or lens to the detector of the second ancillary sensor. The emitted light may reach the detector of the second ancillary sensor directly or after reflection within the housing of the motion detector. That is to say, the light emitted by the emitter of the second ancillary sensor to the detector of the second ancillary sensor may be detectable without requiring reflection by an object within the monitored environment.

Wherein the motion detector may comprises a controller. The controller may be configured to control operation of the motion detector. The controller may comprise a processor and a memory. The memory may comprise computer readable instructions for controlling the processor. The controller may be in communication with the primary sensing system and the ancillary sensing system, and particularly in communication with the first and second ancillary sensors.

The motion detector may be configured to take a first action responsive to detection of movement within the monitored environment by the primary sensing system. The motion detector may be configured to take a second action responsive to detection of masking of the first sensor by the ancillary sensing system.

The first and second actions may be different or may be the same. The first action or the second action may comprise triggering an alarm or transmitting an alert to an intrusion detection system.

Viewed from a second aspect, the present invention provides a method of detecting masking of a motion detector, wherein the motion detector is configured to detect movement of a person within a monitored environment, the method comprising: emitting an optical signal from the motion detector into the monitored environment; receiving a reflection of the optical signal at the motion detector, the reflected optical signal having been reflected by an object within the monitored environment; and determining that the object is masking the motion detector when a time-of-flight of the reflected optical signal is below a predetermined threshold.

The motion detector may comprise any features of the motion detector described above.

Certain preferred embodiments of the present invention will now be described, by way of example only and with reference to the accompanying drawings, in which:

Figure 1 is a front view of a motion detector;
Figure 2 is a cut-away side view of the motion detector of Figure 1;
Figure 3 is a schematic diagram showing operation of an ancillary sensor of the motion detector of Figure 1;
Figure 4 is a schematic diagram showing an alternative configuration of the ancillary sensor;
Figure 5 is a front view of an alternative motion detector;
Figure 6 is a cut-away side view of the motion detector of Figure 5;

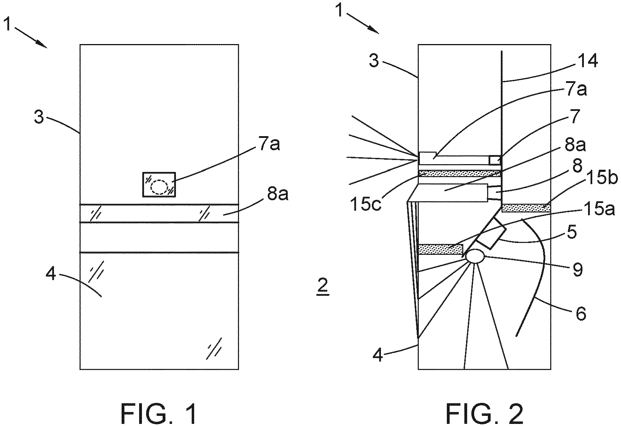

Figures 1 and 2 illustrate a first embodiment of a motion detector 1 for monitoring an environment 2. The motion detector 1 is of the type intended for use within an intrusion detection security system (not shown).

The motion detector 1 comprises a housing 3 with a window 4. The window 4 is transparent to at least infrared light. Such windows are often opaque or translucent to visible light. In the illustrated embodiment, the motion detector 1 is configured to monitor an environment 2 forwards of the motion detector 1, and hence the window 4 is on a front face of the motion detector 1.

The motion detector 1 comprises a primary sensing system for detection of motion within the monitored environment 2, and an ancillary sensing system for detection of masking of the motion detector 1.

The motion detector 1 comprises a controller 14 in the form of a printed circuit board comprising control logic 13. For example, the controller 14 may comprise a memory and a processor, where the memory stores computer-readable instructions to control operation of the processor. The controller 14 controls operation of the motion detector 1, including the primary sensing system and the ancillary sensing system, as described herein.

The primary sensing system of the motion detector comprises a primary sensor 5 mounted within the housing for detecting motion within the environment 2. The primary sensor 5 comprises a passive infrared (PIR) sensor 5 configured to detect infrared light from within the environment 2.

A mirror 6 is provided within the housing 6 to act as a focussing element, and the mirror 6 is configured to focus light received through the window 4 from the environment 2 onto the primary sensor 5. The mirror 6 may, for example, comprise a Fresnel mirror.

The primary sensor 5 is configured to detect infrared light emitted by a live subject (not shown) within the environment 2. Motion of the subject within the environment 2 will cause changes in the luminous flux received by the primary sensor 5, and when a rate of change of the detected luminous flux exceed a predetermined threshold then the motion detector 1 will take an appropriate action, such as triggering an intrusion alarm or sending an alert to a controller of the intrusion detection system.

Optionally, an optical filter, such as a band-pass optical filter, may be provided between the primary sensor 5 and the environment 2 to restrict which wavelengths of light are received by the primary sensor 5.

The primary sensor 5, the focusing element 6 and the filter, if present, collectively provide the primary sensing system of the motion detector 1.

The ancillary sensing system of the motion detector 1 comprises a first emitter 7, a second emitter 8 and a receiver 9. The first emitter 7 and the second emitter 8 are each configured to emit infrared light, and the receiver 9 is configured to receive the emitted infrared light.

The first emitter 7 is provided with a first emitter lens 7a configured to act as a focussing element to direct infrared light emitted by the first emitter 7 into the monitored environment 2. The first emitter 7 is provided within the housing 3 of motion detector 1, and the first emitter lens 7a is positioned such that the emitted infrared light is emitted from the housing 3 but does not pass through the window 4 of the housing 3.

The second emitter 8 is provided with a second emitter lens 8a configured to act as a focussing element to direct infrared light emitted by the second emitter 8 onto the surface of the window 4. The second emitter 8 is provided within the housing 3 of motion detector 1.

The receiver 9 is provided within the housing 3 of the motion detector, and behind the window 4. The receiver 9 is configured to receive light emitted by the first emitter 7 after reflection by an object within the monitored environment 2, and to receive light emitted by the second emitter 8 without reflection by an object within the monitored environment.

In order to prevent cross-talk, one or more light barriers 15a, 15b, 15c are provided within the housing to isolate the receiver 9 from each of the first and second emitters 7, 8. The light barriers 15a, 15b, 15c are substantially opaque to the infrared light emitted by the first and second emitters 7, 8. In the illustrated embodiment, the light barriers 15a, 15b, 15c also isolate the first and second emitters 7, 8 from one another.

The first emitter 7 and the receiver 9 provide a first ancillary sensor for detection of masking of the motion detector 1 by an object 10 within the monitored environment 2, whilst the second emitter 8 and the receiver 9 provide a second ancillary sensor for detection of masking of the motion detector 1 by obscuration of the window 4.

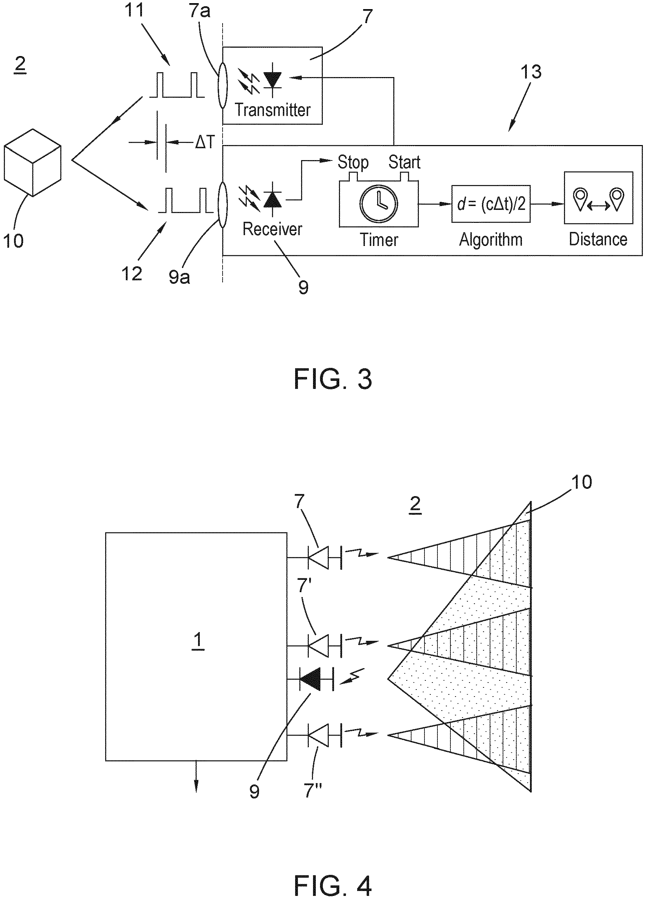

The first ancillary sensor is configured to operate on a time-of-flight principle, as illustrated in Figure 3, and is configured to detect masking of the motion detector 1 by an object 10 within the monitored environment 2.

The first emitter 7 is configured to periodically emit a predetermined signal 11, such as a single pulse of infrared light or a chain of pulses of infrared light. Typically, the or each pulse would be of a very short duration, such as less than 10 nanoseconds.

The emitted signal 11 may be a laser signal and the first emitter 7 may be a laser emitter, such as a laser diode. Thus, the emitted signal 11 may comprise light at substantially a single wavelength.

When the emitted signal 11 reaches an object 10 within the monitored environment 2, a reflected signal 12 will be generated by the scattering of the emitted light by the object 10. This reflected signal 12 is detected the receiver 9.

By comparing the emitted signal and the received signal, for example using processing logic 13, it is possible to determine a time of flight $\Delta T$ of the reflected signal 12, i.e. a time between emission of the signal by the first emitter 7 and detection by the receiver 9. The time of flight $\Delta T$ can be used to approximate a distance between the motion detector 1 and the object 10 based on the speed of light, as given below.

$$d = \frac{c \cdot \Delta T}{2}$$

where d is the distance between the motion detector 1 and the object 10, c is the speed of light in a vacuum (which is also approximately the speed of light in air), and $\Delta T$ is the time-of-flight of the reflected signal 12.

In order to simplify processing, the time-of-flight is determined as the time delay between the emission of a pulse in the emitted signal and the first detection of a reflected pulse above a threshold. The threshold may be a fixed, predetermined threshold or may be a dynamic threshold, for example based on detected background infrared levels. The time-of-flight detected in this manner corresponds to a distance between the motion detector 1 and the closest object 10 within the field of view of the first emitter 7.

As a result of this processing, it is important not to have both of the first emitter 7 and the receiver 9 provided behind the window 4 because reflection of the emitted signal 11 by the window 4 (and within the housing 3) could be detectable, and may require more complex processing to cancel.

Based on the distance to the closest object 10 within the monitored environment, the motion detector 1 is able to determine whether it has been masked by an object. If the distance to the closest object 10 within the monitored environment is below a predetermined threshold, such as less than 2 meters, the motion detector 1 may trigger an alert. Such an alert may comprise triggering an alarm, and/or may comprise alerting an operator to inspect the motion detector 1.

The first ancillary sensor may have a limited range, typically up to about 4m in good conditions, but falling to about 2m in bright sunlight. Consequently, in order to maximise the range of the first ancillary sensor, the first emitter 7 preferably has a relatively narrow field of view.

With reference to Figure 4, in an optional further embodiment, a plurality of first emitters 7, 7', 7" may be provided and configured to illuminate different regions of the monitored environment 2. A single receive 9 may be used to detect reflected signals 12 from each of the first emitters 7, 7', 7", as illustrated, or alternatively multiple receivers 9 may be provided depending upon the geometry of the motion detector 1. In such an embodiment, the first emitters 7, 7', 7" may be configured to emit signals 11 in a time-spaced manner such that only a single first emitter 7, 7', 7" illuminates the monitored space 2 at any particular time to enable the receiver 9 to discriminate between the reflected signals 12 from each first emitter 7, 7', 7".

Turning back to Figure 2, the second ancillary sensor comprises the second emitter 8 and the receiver 9, and is configured to determine masking of the motion detector 1 by obscuration of the window 4.

During operation, the second emitter 8 periodically emits a predetermined signal, such as a single pulse of infrared light or a chain of pulses of infrared light. For the second emitter 8, the or each pulse does not need to be of particularly short duration, and could be up to several milliseconds or longer in duration.

The second emitter 8 may be a laser emitter, such as a laser diode, or may simply be an infrared LED.

The second emitter lens 8a is configured to direct the emitted light across the window 4 of the housing 3, and it is subsequently detected by the receiver 9, for example after scattering within the interior of the housing 3.

The intensity of light emitted by the second emitter 8 and detected by the receiver 9 should remain substantially constant. Therefore, by comparing the detected intensity of light detected by the receiver 9 to a predetermined value, it is possible to detect masking of the window 4. Such masking would typically result in a reduction in the detected intensity.

Optionally, the reference value may comprise a dynamic reference value, such as a rolling average of recent measurements. This could be used to account for dust or other fouling accumulating on the window 4, which would reduce its infrared transparency.

Based on the intensity of light detected by the second ancillary sensor, the motion detector 1 is able to determine whether the window 4 has been masked by an object. If the intensity of detected light is below a predetermined threshold, such as less than 80% of the expected intensity, the motion detector 1 may trigger an alert. Such an alert may comprise triggering an alarm, and/or may comprise alerting an operator to inspect the motion detector 1.

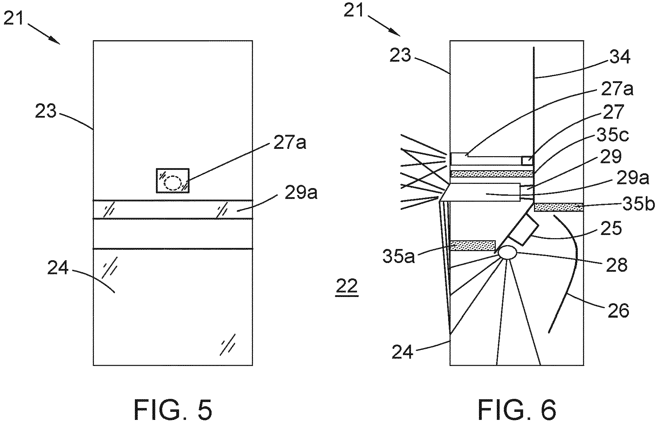

With reference to Figures 5 and 6, a second motion detector 21 is shown.

The second motion detector 1 is of similar construction to the first motion detector 1, and operates in substantially the same manner. Therefore, only the differences between these motion detectors 1, 21 will be described.

Elements of the second motion detector 21 that correspond to elements of the first motion detector 1 are numbered with the same reference signs, but incremented by 20. The descriptions of these elements above apply also to the second motion detector 21, unless otherwise stated.

In the second motion detector 21, the locations of the second emitter 28 and the receiver 29 have been reversed compared to the first motion detector 1. Thus, the second emitter 28 is provided within the housing 23 and behind the window 24, and the receiver is provided with a receiver lens 29a that is exposed from the housing 23 separately from the window 24.

The receiver lens 29a in this embodiment is configured to receive light emitted by the first emitter 27 and scattered by an object within the monitored environment 22 without passing through the window 24.

The receiver lens 29a in this embodiment is also configured to receive light emitted by the second emitter 28 after it has passed through the window 24 and without scattering by an object within the monitored environment 22.

The first emitter 27, second emitter 28 and receiver 29 in this embodiment form first and second ancillary sensors, which operate in substantially the same manner as the first and second ancillary sensors of the first motion detector 1.

**Claims**

1. A motion detector for a security system, the motion detector comprising:

   a primary sensing system configured to detect movement of a person within a monitored environment; and
   an ancillary sensing system configured to detect masking of the primary sensing system, the ancillary sensing system comprising an optical time-of-flight sensor.

2. A motion detector according to claim 1, wherein the primary sensing system comprises one of an infrared sensor, a microwave sensor and an ultrasound sensor.

3. A motion detector according to claim 1, wherein the primary sensing system comprises a passive infrared sensor.

4. A motion detector according to any preceding claim, wherein the optical time-of-flight sensor comprises an infrared time of flight sensor.

5. A motion detector according to any preceding claim, wherein the optical time-of-flight sensor comprises an emitter and a detector, wherein the emitter of the optical time-of-flight sensor is configured to emit light into the monitored environment, and wherein the detector of the optical time-of-flight sensor is configured to receive the light after reflection from the monitored environment.

6. A motion detector according to claim 5, further comprising:

   a housing including a window or lens,
   wherein the primary sensing system is disposed inside the housing and is configured to monitor the monitored environment through the window or lens, and
   wherein the emitter of the optical time-of-flight sensor is configured to emit the light into the monitored environment without passing through the window or lens.

7. A motion detector according to claim 6, wherein the detector of the optical time-of-flight sensor is configured to receive the light reflected from the monitored environment after passing through the window or lens.

8. A motion detector according to claim 6 or 7, wherein the optical time-of-flight sensor is a first ancillary sensor, and wherein the ancillary sensor system further comprises:

   a second ancillary sensor configured to detect a change in transparency of the window or lens.

9. A motion detector according to claim 8, wherein the second ancillary sensor comprises an emitter and a detector, wherein the emitter of the second ancillary sensor is configured to emit light directly through the window or lens to the detector of the second ancillary sensor.

10. A motion detector according to claim 9, wherein the detector of the first ancillary sensor and the detector of the second ancillary sensor are the same detector.

11. A motion detector according to any preceding claim, wherein the motion detector is configured to take a first action responsive to detection of movement within the monitored environment by the primary sensor, and wherein the motion detector is configured to take a second action responsive to detection of masking of the first sensor by the ancillary sensor.

12. A method of detecting masking of a motion detector, wherein the motion detector is configured to detect movement of a person within a monitored environment, the method comprising:

   emitting an optical signal from the motion detector into the monitored environment;
   receiving a reflection of the optical signal at the motion detector, the reflected optical signal having been reflected by an object within the monitored environment; and
   determining that the object is masking the motion detector when a time-of-flight of the reflected optical signal is below a predetermined threshold.

FIG. 1

FIG. 2

FIG. 3

FIG. 4

FIG. 5

FIG. 6

Europäisches
Patentamt

European
Patent Office

Office européen
des brevets

**EUROPEAN SEARCH REPORT**

Application Number

EP 21 20 4785

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 476 397 A1 (CERBERUS AG [CH]) 25 March 1992 (1992-03-25) * column 5, line 1 - column 8, line 12 * ----- | 1-12 | INV. G08B29/04 G08B13/193 |
| Y | Steve Leibson: "ToF Sensors Provide Accurate Distance Sensing ¦ DigiKey", , 28 November 2018 (2018-11-28), pages 1-8, XP055909516, Retrieved from the Internet: URL:https://www.digikey.de/en/articles/fundamentals-distance-measurement-gesture-recognition-tof-sensors [retrieved on 2022-04-05] * page 1, paragraph 4 - paragraph 5 * * page 7, paragraph 1 - page 8, paragraph 1 * ----- | 1-12 | |
| Y | DE 10 2015 202499 A1 (IFM ELECTRONIC GMBH [DE]) 20 August 2015 (2015-08-20) * paragraphs [0018] - [0020] * ----- | 1-12 | TECHNICAL FIELDS SEARCHED (IPC) |
| A | US 6 377 174 B1 (SIEGWART DAVID [CH] ET AL) 23 April 2002 (2002-04-23) * column 3, line 59 - column 7, line 54 * ----- | 1-12 | G08B |

The present search report has been drawn up for all claims

| Place of search | Date of completion of the search | Examiner |
|---|---|---|
| Munich | 5 April 2022 | Dascalu, Aurel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 4785

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2022

| Patent document cited in search report | | Publication date | Patent family member(s) | | Publication date |
|---|---|---|---|---|---|
| EP 0476397 | A1 | 25-03-1992 | AT 98390 T | | 15-12-1993 |
| | | | CH 680881 A5 | | 30-11-1992 |
| | | | EP 0476397 A1 | | 25-03-1992 |
| DE 102015202499 | A1 | 20-08-2015 | NONE | | |
| US 6377174 | B1 | 23-04-2002 | EP 1061489 A1 | | 20-12-2000 |
| | | | US 6377174 B1 | | 23-04-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4752768 A